(19) Europäisches Patentamt
European Patent Office
Office européen des brevets

(11) Publication number: 0 174 086
B1

(12) # EUROPEAN PATENT SPECIFICATION

(45) Date of publication of patent specification: 26.09.90

(51) Int. Cl.[5]: A 01 N 43/80, B 27 K 3/34

(21) Application number: 85305287.6

(22) Date of filing: 25.07.85

(54) ## 3-Isothiazolone insecticides.

(30) Priority: 02.08.84 US 637243

(43) Date of publication of application:
12.03.86 Bulletin 86/11

(45) Publication of the grant of the patent:
26.09.90 Bulletin 90/39

(84) Designated Contracting States:
AT BE CH DE FR GB IT LI LU NL SE

(56) References cited:
GB-A-1 571 814
US-A-4 154 818
US-A-4 322 475

(73) Proprietor: ROHM AND HAAS COMPANY
Independence Mall West
Philadelphia Pennsylvania 19105 (US)

(72) Inventor: Greenley, David Eugene
1105 Guernsey Court
Blue Bell, Pa. 19422 (US)

(74) Representative: Angell, David Whilton et al
ROHM AND HAAS (UK) LTD. European
Operations Patent Department Lennig House 2
Mason's Avenue
Croydon CR9 3NB (GB)

EP 0 174 086 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a method of using 3-isothiazolones or salts thereof to repel subterranean termites (Termitidae), drywood termites (Kalotermitadae), moist wood termites (Rhinotermitidae) or damp wood termites (Termopsidae).

There are three general classes of wood preservatives, toxic oils such as creosote that evaporate slowly and are relatively insoluble in water; water solutions of salts that are injected directly into the wood, and finally, highly toxic chemicals which are normally dissolved in solvents or mixtures of solvents other than water.

US—A—4,154,818 and 4,322,475 and GB 1571814 disclose the use of certain isothiazolones against certain microbes, marine organisms and pests. However, they do not suggest that the compounds would be useful against termites, much less that they would repel termites.

This invention employs known 3-isothiazolone biocides. Patents disclosing 3-isothiazolones, their preparation and their uses include U.S. Patents Nos. 3,523,121; 3,761,488; 3,887,352; 4,062,946; 4,127,687; 4,150,026; 4,241,214; 4,243,403; 4,252,694; and 4,279,762.

These compounds are especially effective in preventing damage to wood caused by the above-mentioned wood attacking insects. The 3-isothiazolones can be incorporated into the wood by any of several methods including pressure impregnation, vacuum impregnation, dip treatment, spray treatment, application of a gel or paste or application of a dust.

The 3-isothiazolones which may be employed in this invention have the following structural formula:

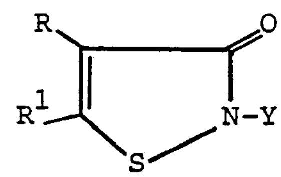

wherein R and $R^1$ are the same or different radicals selected from hydrogen, halo or $C_1$—$C_4$ alkyl and Y is substituted or unsubstituted $(C_{1-18})$alkyl wherein the substituent is selected from hydroxy, halo, cyano, alkylamino, dialkylamino, phenylamino, halophenylamino, carboxy, carbalkoxy, alkoxy, aryloxy or carbamoxy, Y can also be an aryl group optionally substituted with one or more halo, cyano, nitro, $(C_1$—$C_4)$-alkyl, $(C_1$—$C_4)$alkoxy, $(C_1$—$C_4)$alkyl-acylamino, $(C_1$—$C_4)$carbalkoxy, hydroxy, trihalomethyl, phenoxy, alkylamino, dialkylamino, carboxy or sulfamyl groups, an aralkyl group optionally substituted with one or more halo, nitro, $(C_1$—$C_4)$alkyl or $(C_1$—$C_4)$alkoxy groups, or unsubstituted cycloalkyl having 3 to 6 nuclear carbon atoms or a salt thereof.

Especially preferred are those compounds where R and $R^1$ are hydrogen and Y is selected from $C_1$—$C_{12}$ straight- or branched-chain alkyl, benzyl, *p*-chlorobenzyl, phenethyl and *p*-chlorophenethyl; also those where R and $R^1$ are chloro and Y is selected from $C_1$—$C_{12}$ straight- or branched-chain alkyl, benzyl, *p*-chlorobenzyl, phenethyl and *p*-chlorophenethyl and cyclohexyl; also, where R is methyl, $R^1$ is chloro and Y is phenyl and substituted phenyls; and where R is hydrogen, $R^2$ is chloro and Y is selected from $C_1$—$C_{12}$ straight or branched chain alkyl, benzyl, *p*-chlorobenzyl, phenethyl and *p*-chlorophenethyl and cyclohexyl.

In the invention wood is treated with an effective amount of the 3-isothiazolone.

In treating the wood directly, the 3-isothiazolones will be applied to give a retention of from 0.016 to 16.02 $kg/m^3$ (0.001 to 1.0 $lb/ft^3$) and, preferably, from 0.16 to 8.01 $kg/m^3$ (0.01 to 0.5 $lb/ft^3$) of isothiazolone.

When it is desired to spray wood which is already infested wood, the effective amount of 3-isothiazolone applied is generally in the range of from about 0.01% to about 20% by weight of active ingredient and, preferably, from about 0.10 to 2.5% by weight of active ingredient.

Suitable solvents which may be employed as vehicles include water, mineral spirits, toluene, xylene, acetone, kerosene, aromatic hydrocarbons, benzene, ethyl acetate, white spirits and the like.

The 3-isothiazolones can be used alone or may be blended with other wood preserving materials such as creosote, pentachlorophenyl, copper-chromearsenic, tributyl tin oxide, copper-8-quinolinolate, copper naphthenate, methylene bisthiocyanate, chlorothalonil, 2-(thiocyanomethylthio) benzothiozol, 3-iodo-2-propynyl butyl carbamate, N-nitroso-N-cyclohexyl hydroxylamine, N-cyclohexyl-N-methoxy-2,5-dimethyl-3-furamide, benzimidazolyl methylcarbamate, sodium pentachlorophenate, sodium tetrachlorophenate and similar known materials.

The following test data shows the activity of two of the 3-isothiazolones; however, it is to be understood, that by substituting other 3-isothiazolones or salts thereof, similar results would be obtained.

Test

This test (TABLE 1) shows the termiticide activity of 5-chloro-N-methyl-3-isothiazolone in terms of percent survivors. The test is conducted by placing termites onto filter paper which had been dip treated with the various concentrations of the test compound and counting survivors over time.

Termites: *Reticulitermes* spp. collected from rotted logs. 50 adults were used for each sample.

Method: Solutions of the test compound were prepared at concentrations ranging from 0.01% active

ingredient to 3.0% active ingredient. Filter paper discs (9.0 cm Whatman No. 2) were dipped into the test solutions, removed and allowed to dry at room temperature. Dried filter papers were placed into Petri dishes and 50 adult termites were added. After various amounts of time the number of live termites were counted.

The following table shows the results of the test:

TABLE I

| 5-chloro-N-methyl-3-isothiazolone (% percent active ingredient) | % Survivors Initial | 5 Hours | 1 Day | 2 Days | 3 Days | 4 Days |
|---|---|---|---|---|---|---|
| 0.0 | 100 | 100 | 100 | 98 | 96 | 94 |
| 0.01 | 100 | 75 | 54 | 0 | 0 | 0 |
| 0.05 | 100 | 51 | 13 | 0 | 0 | 0 |
| 0.10 | 100 | 38 | 0 | 0 | 0 | 0 |
| 0.20 | 100 | 34 | 0 | 0 | 0 | 0 |
| 0.30 | 100 | 32 | 0 | 0 | 0 | 0 |
| 0.50 | 100 | 41 | 0 | 0 | 0 | 0 |
| 1.0 | 100 | 5 | 0 | 0 | 0 | 0 |
| 2.0 | 100 | 0 | 0 | 0 | 0 | 0 |
| 3.0 | 100 | 0 | 0 | 0 | 0 | 0 |

Example

This Example of the invention (TABLE II) is performed following the ASTM D3345—74 Termite Test employing 4,5-dichloro-2-N-octyl-3-isothiazolone. Southern yellow pine blocks were vacuum impregnated with the isothiazolone. The blocks were then exposed to *Reticulitermes flavipes* termites.

TABLE II

| Retention of isothiazolone[1] in kg/m³ | (pounds per cubic foot) | Weight[1] Loss % | Block[2] Rating | Mortality |
|---|---|---|---|---|
| 0 | 0.0 | 8.9 | 4.0 | Slight |
| 0.048 | 0.003 | 3.6 | 5.8 | Complete |
| 0.256 | 0.016 | 1.6 | 9.0 | Complete |
| 0.48 | 0.030 | 0.1 | 9.8 | Complete |
| 1.248 | 0.078 | 0.0 | 10.0 | Complete |
| 2.576 | 0.161 | 0.0 | 10.0 | Complete |

1) Values are averages of five replicate wood blocks

2) Ratings:

10 = Sound surface, slight nibbles
9 = Light attack
7 = Medium Attack
4 = Heavy attack
0 = Total failure

**Claims**

1. The use of an isothiazolone of the formula:

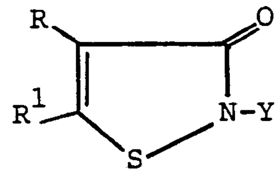

wherein R and $R^1$ are the same or different radicals selected from hydrogen, halo or $C_1$—$C_4$ alkyl and Y is substituted or unsubstituted $(C_{1-18})$alkyl wherein the substituent is selected from hydroxy, halo, cyano, alkylamino, dialkylamino, phenylamino, halophenylamino, carboxy, carbalkoxy, alkoxy, aryloxy or carbamoxy, an aryl group optionally substituted with one or more halo, cyano, nitro, $(C_1$—$C_4)$alkyl, $(C_1$—$C_4)$alkoxy, $(C_1$—$C_4)$alkyl-acylamino, $(C_1$—$C_4)$carbalkoxy, hydroxy, trihalomethyl, phenoxy, alkylamino, dialkylamino, carboxy or sulfamyl groups, an aralkyl group, optionally substituted with one or more halo, nitro, $(C_1$—$C_4)$alkyl, or $(C_1$—$C_4)$alkoxy groups, or unsubstituted cycloalkyl having 3 to 6 nuclear carbon atoms or a salt thereof, for repelling subterranean termites, dry wood termites, moist wood termites or damp wood termites by incorporating an effective amount of the isothiazolone into wood which may be subject to attack.

2. The use of claim 1 wherein the isothiazolone or salt thereof is incorporated into the wood in an amount of from 0.016 to 16.02 kg/$m^3$ (0.001 to 1.0 pounds per cubic foot) of wood preferably 0.16 to 8.01 kg/$m^3$ (0.01 to 0.5 pounds per cubic foot) of wood.

3. The use of any preceding claim wherein Y is an unsubstituted alkyl group of 1 to 18 carbon atoms and/or R is hydrogen and/or $R^1$ is hydrogen or halogen.

4. The use of claim 3 wherein R is hydrogen and/or $R^1$ is hydrogen or halogen.

5. The use of claim 3 wherein $R^1$ is hydrogen or halogen.

6. The use of any preceding claim wherein Y is a *n*-octyl, R is hydrogen and $R^1$ is hydrogen or wherein Y is methyl, R is hydrogen and $R^1$ is chlorine.

7. The use of any preceding claim wherein the isothiazolone is used in a composition containing 0.1% to 20% by weight of the isothiazolone.

**Patentansprüche**

1. Verwendung eines Isothiazolons der Formel

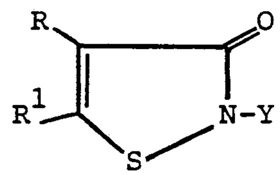

worin R und $R^1$ gleiche oder verschiedene Reste sind, ausgewählt aus Wasserstoff, Halogen oder $(C_{1-4})$-Alkyl, und Y substituiertes oder nichtsubstituiertes $(C_{1-18})$-Alkyl ist, wobei der Substituent ausgewählt ist aus Hydroxy, Halogen, Cyano, Alkylamino, Dialkylamino, Phenylamino, Halogenphenylamino, Carboxy, Carbalkoxy, Alkoxy, Aryloxy oder Carbamoxy, eine Arylgruppe, die gegebenenfalls substituiert ist mit einem oder mehreren der Substituenten Halogen, Cyano, Nitro, $(C_{1-4})$-Alkyl, $(C_{1-4})$-Alkoxy, $(C_{1-4})$-Alkylacylamino, $(C_{1-4})$-Carbalkoxy, Hydroxy, Trihalogenmethyl, Phenoxy, Alkylamino, Dialkylamino, Carboxy oder Sulfamyl, einer Aralkylgruppe, die gegebenenfalls substituiert ist mit einem oder mehreren der Substituenten Halogen, Nitro, $(C_{1-4})$-Alkyl oder $(C_{1-4})$-Alkoxygruppen, oder nichtsubstituiertes Cycloalkyl mit 3 bis 6 Kernkohlenstoffatomen oder eines Salzes davon zum Abweisen von unterirdisch lebenden Termiten, Trockenholztermiten, Naßholztermiten oder Feuchtholztermiten durch Einmengung einer wirksamen Menge des Isothiazolons in das Holz, das gegenüber einem Anfall geschützt werden soll.

2. Verwendung nach Anspruch 1, wobei das Isothiazolon oder das Salz davon in das Holz in einer Menge von 0,016 bis 16,02 kg/$m^3$ (0,001 bis 1,0 pounds per cubic foot) des Holzes und vorzugsweise in einer Menge von 0,16 bis 8,01 kg/$cm^3$ (0,01 bis 0,5 pounds per cubic foot) des Holzes eingebracht wird.

3. Verwendung nach einem der vorhergehenden Ansprüche, worin Y eine nichtsubstituierte Alkylgruppe mit 1 bis 18 Kohlenstoffatomen und/oder R Wasserstoff und/oder $R^1$ Wasserstoff oder Halogen ist.

4. Verwendung nach Anspruch 3, worin R Wasserstoff und/oder $R^1$ Wasserstoff oder Halogen ist.

5. Verwendung nach Anspruch 3, worin $R^1$ Wasserstoff oder Halogen ist.

6. Verwendung nach einem der vorhergehenden Ansprüche, worin Y n-Octyl ist, R Wasserstoff ist und $R^1$ Wasserstoff bedeutet oder wobei Y Methyl ist, R Wasserstoff ist und $R^1$ Chlor ist.

7. Verwendung nach einem der vorhergehenden Ansprüche, wobei das Isothiazolon in einer Menge verwendet wird, die 0,1 bis 20 Gew.-% des Isothiazolons enthält.

**Revendications**

1. Utilisation d'une isothiazolone de formule:

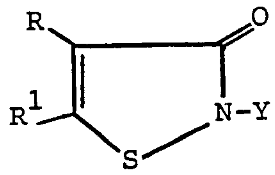

dans laquelle R et $R^1$ représentent des radicaux identique ou différents choisis parmi l'hydrogène, un groupe halogéno ou alcoyle en $C_1$ à $C_4$ et Y représente un groupe alcoyle (en $C_1$ à $C_{18}$), substitué ou non substitué, dans lequel le substituant est choisi parmi un groupe hydroxy, halogéno, cyano, alcoylamino, dialcoylamino, phénylamino, halogénophénylamino, carboxy, carbalcoxy, alcoxy, aryloxy ou carbamoxy, un groupe aryle (éventuellement substitué par un ou plusieurs groupes halogéno, cyano, nitro, alcoyle (en $C_1$ à $C_4$), alcoxy (en $C_1$ à $C_4$), alcoyl (en $C_1$ à $C_4$) acylamino, carbalcoxy (en $C_1$ à $C_4$), hydroxy, trihalogénométhyle, phénoxy, alcoylamino, dialcoylamino, carboxy ou sulfamyle) un groupe aralcoyle (éventuellement substitué par un ou plusieurs groupes halogéno, nitro, alcoyle (en $C_1$ à $C_4$) ou alcoxy (en $C_1$ à $C_4$) ou un groupe cycloalcoyle non substitué comportant 3 à 6 atomes de carbone de noyau ou d'un de ses sels, pour repousser des termites souterrains, des termites du bois sec, des termites du bois humide ou des termites du bois mouillé, en incorporant une quantité efficace de l'isothiazolone au bois risquant de subir une telle attaque.

2. Utilisation selon la revendication 1, dans laquelle on incorpore au bois l'isothiazolone ou son sel, en une quantité de 0,016 à 16,02 $kl/m^3$ (0,001 à 1,0 livre par pied cube) de bois, de préférence 0,16 à 8,01 $kg/m^3$ (0,01 à 0,4 livre par pied cube) de bois.

3. Utilisation selon l'une des revendications précédentes, dans laquelle Y représente un groupe alcoyle non substitué, ayant 1 à 18 atomes de carbone, et/ou R est l'hydrogène et/ou $R^1$ est l'hydrogène ou un halogène.

4. Utilisation selon la revendication 3, dans laquelle R représente l'hydrogène et/ou $R^1$ représente l'hydrogène et/ou $R^1$ représente l'hydrogène ou un halogène.

5. Utilisation selon la revendication 3, dans laquelle $R^1$ représente l'hydrogène ou un halogène.

6. Utilisation selon l'une quelconque des revendications précédentes, dans laquelle Y représente un groupe n-octyle, R représente l'hydrogène et $R^1$ représente l'hydrogène, ou dans laquelle Y représente un groupe méthyle, R représente l'hydrogène et $R^1$ représente le chlore.

7. Utilisation selon l'une quelconque des revendications précédentes, dans laquelle on utilise l'isothiazolone dans une composition contenant 0,1% à 20% en poids de l'isothiazolone.